# EUROPEAN PATENT APPLICATION

(11) **EP 3 048 259 A1**
(43) Date of publication of application: **27.07.2016**
(21) Application number: 16150344.6
(22) Date of filing: 06.01.2016
(51) Int. Cl.: F01D 9/04, F01D 9/06, F01D 25/16

(54) **GAS TURBINE ENGINE MID-TURBINE FRAME TIE ROD ARRANGEMENT**

(30) Priority: 09.01.2015 US 201514593842
(71) Applicant: United Technologies Corporation, Farmington, CT 06032 (US)
(72) Inventor: BAUER, Steven J., East Haddam, CT Connecticut 06423 (US); DALE, Timothy, West Manchester, CT Connecticut 06042 (US); LIEBEL, Christina S., Wethersfield, CT Connecticut 06109 (US); CHUONG, Conway, Manchester, CT Connecticut 06040 (US)
(74) Representative: Hull, James Edward

(57) **Abstract**

A gas turbine engine mid-turbine frame (57) includes inner and outer cases (60, 62) that are arranged about an engine axis (X). A radial plane (R) is arranged normal to the engine axis (X). The inner and outer cases (60, 62) are secured to one another by a tie rod (70) that extends along a longitudinal axis (71). The longitudinal axis (71) is arranged at an acute angle (100) relative to the radial plane (R).

## Description

### BACKGROUND

This disclosure relates to a gas turbine engine mid-turbine frame tie rod arrangement.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

A mid-turbine frame (MTF) is arranged axially between the high and low pressure turbines. One example MTF includes inner and outer cases secured to one another with tie rods extending radially between the cases. Airfoils are provided between the inner and outer cases, and the tie rods extend through some of the airfoils. In one arrangement, one end of the tie rod is threaded and secured to the outer case. The inner end of the rod includes a flange secured to the inner case by multiple fasteners. It is desirable to better balance stresses and deflections within the MTF.

### SUMMARY

In one exemplary embodiment, a gas turbine engine mid-turbine frame includes inner and outer cases that are arranged about an engine axis. A radial plane is arranged normal to the engine axis. The inner and outer cases are secured to one another by a tie rod that extends along a longitudinal axis. The longitudinal axis is arranged at an acute angle relative to the radial plane.

In a further embodiment of the above, the acute angle is between 0°-30°.

In a further embodiment of any of the above, the acute angle is between 3°-15°.

In a further embodiment of any of the above, the acute angle is between 5°-9°.

In a further embodiment of any of the above, an airfoil is arranged between the inner and outer cases. The tie rod extends through the airfoil.

In a further embodiment of any of the above, the outer case includes a boss that has a hole. A fastener is received in the hole and is secured to an end of the tie rod. The fastener abuts a surface of the boss. The surface extends in a generally axial direction that is arranged at the acute angle relative to the engine axis.

In a further embodiment of any of the above, the tie rod includes a flange that is secured to the inner case and is arranged at the acute angle.

In another exemplary embodiment, a gas turbine engine includes a turbine section including high and low pressure turbines. A mid-turbine frame is arranged axially between the high and low pressure turbines. The mid-turbine frame includes inner and outer cases that are arranged about an engine axis. A radial plane is arranged normal to the engine axis. The inner and outer cases are secured to one another by a tie rod that extends along a longitudinal axis. The longitudinal axis is arranged at an acute angle relative to the radial plane.

In a further embodiment of any of the above, the acute angle is between 0°-30°.

In a further embodiment of any of the above, the acute angle is between 3°-15°.

In a further embodiment of any of the above, the acute angle is between 5°-9°.

In a further embodiment of any of the above, an airfoil is arranged between the inner and outer cases. The tie rod extends through the airfoil.

In a further embodiment of any of the above, the outer case includes a boss that has a hole. A fastener is received in the hole and is secured to an end of the tie rod. The fastener abuts a surface of the boss. The surface extends in a generally axial direction that is arranged at the acute angle relative to the engine axis.

In a further embodiment of any of the above, the tie rod includes a flange that is secured to the inner case and is arranged at the acute angle.

### BRIEF DESCRIPTION OF THE DRAWINGS

The disclosure can be further understood by reference to the following detailed description when considered in connection with the accompanying drawings wherein:
Figure 1 schematically illustrates a gas turbine engine including an embodiment of a MTF.
Figure 2 is a schematic view of the MTF shown in Figure 1 illustrating an orientation of a tie rod.
Figure 3 is a cross-sectional view through the MTF shown in Figure 1.
Figure 4 a perspective view of an inner case of the MTF shown in Figure 1 with multiple circumferentially spaced tie rods secured thereto.
Figure 5 is another tie rod embodiment.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

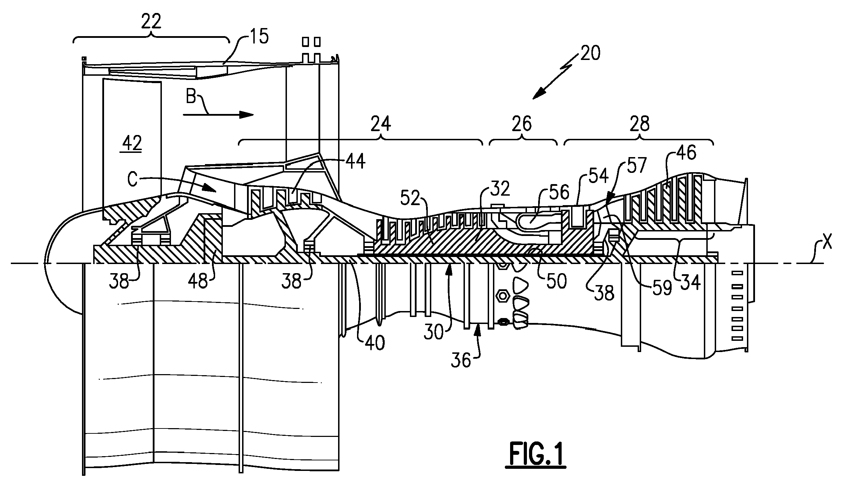

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. It should be understood that the mid-turbine frame can also be arranged between high pressure and intermediate pressure turbines and/or intermediate pressure and low pressure turbines in a three-spool configuration. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3:1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

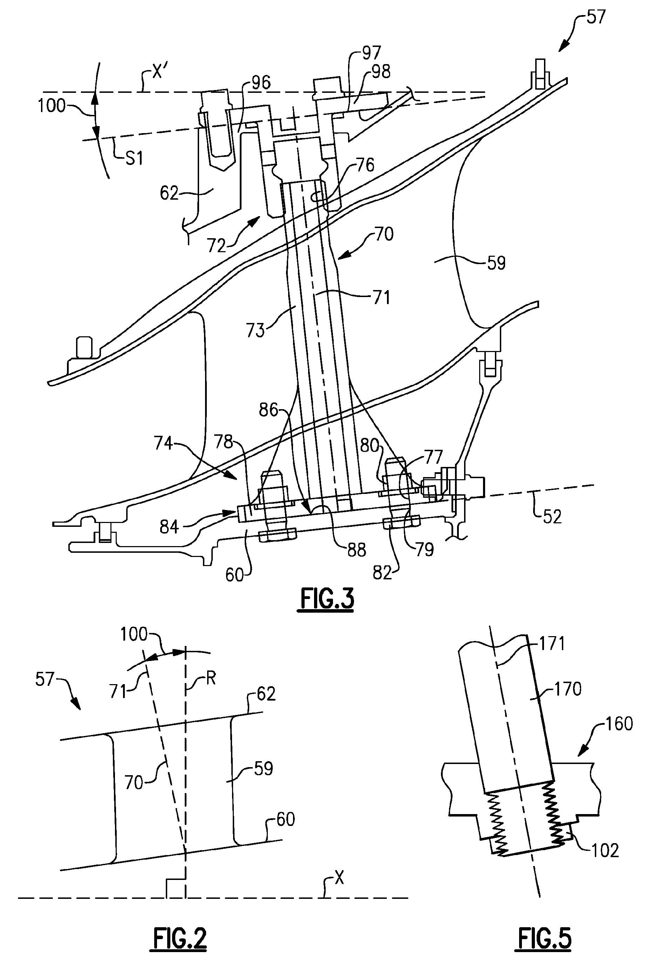

One example of the mid-turbine frame (MTF) 57 is shown schematically in Figure 2. The MTF 57 includes annular cases, in the example an inner case 60 that is circumscribed by an outer case 62. A tie rod 70 extends generally radially along a longitudinal axis 71 between the inner and outer cases 60, 62 to clamp the airfoil 59 between the inner and outer cases 60, 62. The tie rod 70 is canted at an acute angle 100 relative to a radial plane R that is normal to the engine axis X.

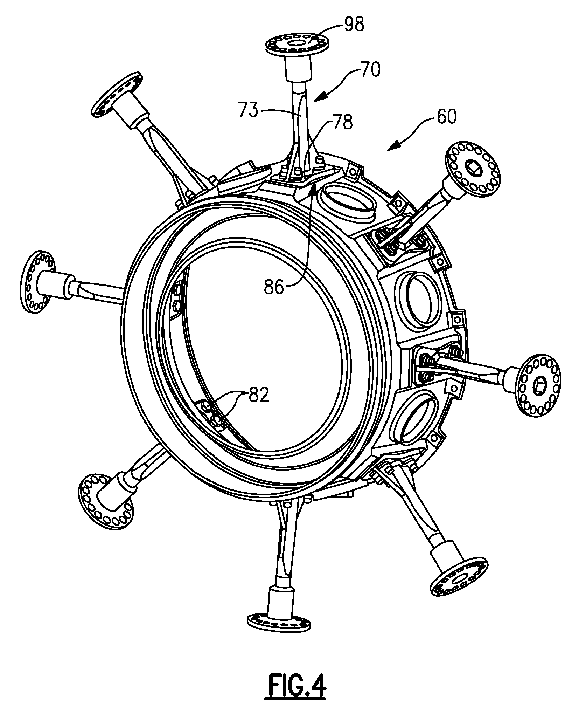

Referring to Figures 3 and 4, the airfoils 59 and tie rods 70 are arranged circumferentially about the inner case 60. An aperture 73 extends radially through the inner and outer cases 60, 62 and the tie rod 70 to enable the passage of wires, tubes, conduits and/or fluids from a location exterior of the outer case 62 to a location interior to the inner case 60.

Each tie rod 70 includes first and second opposing ends 72, 74, which respectively include a threaded portion 76 and a flange 78 in the illustrated example. In one embodiment, the flange 78 is received in a boss 86 in the outer diameter of the inner case 60. The boss 86 provides a flat 88 against which the flange 78 abuts. Bolts 82 extend through holes 77, 79 in the flange 78 and inner case 60 and are secured by nuts 80.

High axial loading from secondary air flow can result in a net aft pressure on the MTF 57, which can introduce high bending loads and moments in the tie rod 70 and inner and outer cases 60, 62. The acute angle 100 reduces the stresses and deflections in these components, which can reduce their weight. The tie rod length 70 may also be reduced as a result. In one example embodiment, the acute angle 100 is within a range of 0°-30° and, for example, within a range of 3°-15°. The acute angle 100 is in a range of 5°-9° in another example. In one example, the acute angle 100 is about 6.5°.

A boss 96 provided by the outer case 62 includes a surface 97 against which a fastener 98 sits and that provides an angle (relative to the engine axis X, which axis is shown in Figure 3 as being moved radially outward and labeled as axis X') S1 that is normal to the longitudinal axis 71. The angle S1 between the surface 97 and the engine axis X' is approximately equal to angle 100. In the example, the flat 88 of the boss 86 provides an angle S2 that is also normal to the longitudinal axis 71. The flange 78 is parallel to the flat 88.

During assembly, the flange 78 is seated within the boss 86 and secured to the inner case 60 by nuts 80 and bolts 82. The edges 92, 94 engage one another. The airfoil 59 is arranged over the tie rod 70. The first end 72 is aligned with the boss 96 in the outer case 62, and the fastener 98 is secured to the threaded portion 76 to clamp the inner and outer cases 60, 62 to the airfoil 59.

Canting the tie rod 70 reduces the rod bending load by trading this loading for more tensile loading when loaded axially. Balancing this loading can reduce the weight and increase the life of the MTF structure. The heavier components in the structure, the inner and outer cases 60, 62, can be thinner to manage local deflections due to the stiffer conical shape of the cases. Canting also reduces axial deflections for managing the bearing and seals location.

Another tie rod configuration may be used other than shown in Figure 3. For example, referring to Figure 5, an inner end of the tie rod 170 may be secured to the inner case 160 by a nut 102. The longitudinal axis 171 of the tie rod may be arranged at the acute angle relative to the engine axis X.

It should also be understood that although a particular component arrangement is disclosed in the illustrated embodiment, other arrangements will benefit herefrom. For example, the disclosed arrangement can be used for a turbine exhaust case. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine mid-turbine frame (57) comprising:
inner and outer cases (60, 62) arranged about an engine axis (X), a radial plane (R) arranged normal to the engine axis (X), the inner and outer cases (60, 62) secured to one another by a tie rod (70) that extends along a longitudinal axis (71), the longitudinal axis (71) arranged at an acute angle (100) relative to the radial plane (R).

2. The mid-turbine frame (57) according to claim 1, wherein the acute angle (100) is between 0°-30°.

3. The mid-turbine frame (57) according to claim 2, wherein the acute angle (100) is between 3°-15°.

4. The mid-turbine frame (57) according to claim 3, wherein the acute angle (100) is between 5°-9°.

5. The mid-turbine frame (57) according to any preceding claim, comprising an airfoil (59) arranged between the inner and outer cases (60, 62), the tie rod (70) extending through the airfoil (59).

6. The mid-turbine frame (57) according to claim 5, wherein the outer case (62) includes a boss (86) that has a hole (77, 79), and a fastener (98) received in the hole (77, 79) and secured to an end (74) of the tie rod (70), the fastener (98) abutting a surface (97) of the boss (86), the surface (97) extending in a generally axial direction that is arranged at the acute angle (100) relative to the engine axis (X).

7. The mid-turbine frame (57) according to claim 5 or 6, wherein the tie rod (70) includes a flange (78) secured to the inner case (60) and arranged at the acute angle (100).

8. A gas turbine engine (20) comprising:
a turbine section (28) including high and low pressure turbines (54, 46);
a mid-turbine frame (57) according to any preceding claim arranged axially between the high and low pressure turbines (54, 46).
